(19) Europäisches Patentamt European Patent Office Office européen des brevets

(11) **EP 2 124 359 A1**

(12) **EUROPEAN PATENT APPLICATION**

(43) Date of publication:
**25.11.2009 Bulletin 2009/48**

(51) Int Cl.:
**H04B 10/158** (2006.01)   **H04B 10/08** (2006.01)

(21) Application number: **09170522.8**

(22) Date of filing: **26.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.02.2008 JP 2008041237**

(62) Document number(s) of the earlier application(s) in accordance with Art. 76 EPC:
**08017064.0 / 2 093 905**

(71) Applicant: **Fujitsu Limited**
**Kawasaki-shi, Kanagawa 211-8588 (JP)**

(72) Inventors:
• **Oda, Shoichiro**
**Kanagawa 211-8588 (JP)**

• **Hoshida, Takeshi**
**Kanagawa 211-8588 (JP)**
• **Nakashima, Hisao**
**Kanagawa 211-8588 (JP)**
• **Tanimura, Takahito**
**Kanagawa 211-8588 (JP)**

(74) Representative: **HOFFMANN EITLE**
**Patent- und Rechtsanwälte**
**Arabellastrasse 4**
**81925 München (DE)**

Remarks:
This application was filed on 17-09-2009 as a divisional application to the application mentioned under INID code 62.

(54) **Monitor circuit for monitoring property of optical fiber transmission line and quality of optical signal**

(57)     An optical receiver, comprises an optical reception circuit 10 adapted to perform coherent reception of an optical signal; a digital equalization filter 21 adapted to generate equalized complex electric field data by filter computation to equalize the optical signal, according to complex electric field data of the optical signal, which is obtained with the coherent reception; and a quality calculating unit 24 adapted to calculate a quality of the optical signal on the basis of the equalized complex electric field data.

OSNR : Optical signal to noise ratio
CD : Chromatic dispersion
CR : Clock recovery

F I G . 2

EP 2 124 359 A1

## Description

### Background of the Invention

#### Field of the Invention

The present invention relates to a monitor method and a monitor circuit for monitoring a property of an optical fiber transmission line and the quality of an optical signal transmitted via the optical fiber transmission line, and to an optical receiver including the monitor circuit.

#### Description of the Related Art

An optical communications system using an optical fiber transmission line generally offers a high-speed data transmission, by which an enormous amount of information is transmitted/received. Therefore, heavy damage may possibly occur if the data transmission is halted. Accordingly, methods for monitoring the property of an optical transmission line or the quality of an optical signal are proposed. Monitoring an optical transmission line and an optical signal is effective also at efficiently operating an optical communications system.

Patent Document 1 (Japanese Patent Publication No. 2001-194267) recites the method for evaluating the quality of an optical signal. The method recited in Patent Document 1 includes the following steps: converting an optical signal into an intensity-modulated electric signal; measuring the intensity distribution of the optical signal by sampling the intensity-modulated electric signal; obtaining an amplitude histogram from the intensity distribution of the optical signal; obtaining two local maximum values from the amplitude histogram, and estimating a distribution function g1 equivalent to "level 1" and a distribution function g0 equivalent to "level 0" by using the two local maximum values; obtaining the average intensity values and the standard deviation values of the "level 1" and "level 2" from the distribution functions g1 and g0; and

evaluating a signal-to-noise ratio on the basis of the average intensity values and the standard deviation values. Namely, with the method recited in Patent Document 1, the quality of an optical signal is monitored by using the intensity information.

Also the technique for converting an optical signal, which is received via an optical fiber transmission line, into an electric signal, and for monitoring the waveform distortion of the optical signal on the basis of clock frequency component and DC component, which are extracted from the electric signal, is proposed.

With the conventional technology, dedicated devices must be provided respectively for properties to be monitored. Individual devices are provided to monitor, for example, a signal-to-noise ratio and an optical waveform distortion. Accordingly, a plurality of monitor devices must be implemented to monitor a plurality of types of properties, leading to an obstacle to the downsizing and/or the cost-cutting of an optical receiver.

### Summary of the Invention

An object of the embodiments is to downsize and/or cost-cut a monitor circuit for monitoring a property of an optical fiber transmission line and the quality of an optical signal.

A disclosed optical receiver according to an aspect of the present invention is an optical receiver, comprising an optical reception circuit adapted to perform coherent reception of an optical signal; a digital equalization filter adapted to generate equalized complex electric field data by filter computation to equalize the optical signal, according to complex electric field data of the optical signal, which is obtained with the coherent reception; and a quality calculating unit adapted to calculate a quality of the optical signal on the basis of the equalized complex electric field data.

Further, a disclosed monitor circuit is used along with an optical reception circuit for performing coherent reception of an optical signal, and includes a digital equalization filter for generating equalized electric field data by filter computation to equalize the optical signal, for electric field data of the optical signal, which is obtained with coherent reception, and a quality calculating unit for calculating the quality of the optical signal on the basis of the equalized electric field data.

Further, another disclosed monitor circuit is used along with an optical reception circuit for performing coherent reception of an optical signal transmitted via an optical fiber transmission line, and includes a digital equalization filter for performing a filter computation to compensate for a property of the optical fiber transmission line, for electric field data of the optical signal, which is obtained with the coherent reception, and a property detecting unit for detecting the property of the optical fiber transmission line by using at least one parameter for determining a transfer function of the digital equalization filter to compensate for the property.

## Brief Description of the Drawings

Fig. 1A and 1B are schematic diagrams illustrating a configuration of an optical communications system using a monitor device according to an embodiment;
Fig. 2 is a block diagram illustrating a configuration of an optical receiver including a monitor circuit according to a first embodiment;
Fig. 3 is a block diagram illustrating an example of an FIR filter;
Fig. 4 is a flowchart illustrating the procedure for calculating the quality of an optical signal in the first embodiment;
Fig. 5 is a schematic diagram illustrating a quality index in the first embodiment;
Fig. 6 is a diagram illustrating a relationship between the quality index and an OSNR in the first embodiment;
Fig. 7 is a block diagram illustrating a configuration of an optical receiver including a monitor circuit according to a second embodiment;
Fig. 8 is a diagram illustrating the property of an LPF;
Fig. 9 is a flowchart illustrating the procedure for calculating the quality of an optical signal in the second embodiment;
Fig. 10 is a diagram illustrating a relationship between a quality index and an OSNR in the second embodiment;
Fig. 11 is a block diagram illustrating a configuration of an optical receiver including a monitor circuit according to a third embodiment;
Fig. 12 is a flowchart illustrating the procedure for calculating the quality of an optical signal in the third embodiment;
Fig. 13 is a schematic diagram illustrating a quality index in the third embodiment;
Fig. 14 is a block diagram illustrating a configuration of an optical receiver including a monitor circuit according to a fourth embodiment;
Fig. 15 is a diagram illustrating a structure of a tap coefficient table;
Fig. 16 is a flowchart illustrating the procedure for calculating a property of an optical fiber transmission line in the fourth embodiment;
Fig. 17 is a flowchart illustrating another procedure executed in the fourth embodiment;
Fig. 18 is a block diagram illustrating a configuration of an optical receiver including a monitor circuit according to a fifth embodiment;
Fig. 19 is a schematic diagram illustrating a nonlinear quantity calculated in the fifth embodiment;
Fig. 20 is a block diagram illustrating a configuration of an optical receiver including a monitor circuit according to a sixth embodiment;
Fig. 21 is a schematic diagram illustrating a nonlinear compensation computation;
Fig. 22 is a schematic diagram illustrating a method for monitoring the quality of a 16QAM signal;
Fig. 23 is a block diagram (No. 1) illustrating a configuration of a monitor circuit that does not include a data recovery function;
Fig. 24 is a block diagram (No. 2) illustrating a configuration of a monitor circuit that does not include a data recovery function;
Fig. 25 is a block diagram (No. 1) illustrating a configuration of a polarization diversity receiver including the monitor circuit;
Fig. 26 is a block diagram (No. 2) illustrating a configuration of a polarization diversity receiver including the monitor circuit;
Fig. 27 is a schematic diagram illustrating an example of an FIR filter used in polarization diversity reception;
Fig. 28 is a block diagram (No. 1) illustrating a configuration of a monitor circuit that does not have a data recovery function in polarization diversity reception;
Fig. 29 is a block diagram (No. 2) illustrating a configuration of a monitor circuit that does not have a data recovery function in polarization diversity reception;
Fig. 30 is a block diagram illustrating a configuration of an optical receiver for making self-coherent reception;
Fig. 31 is a schematic diagram illustrating an example of a delay interferometer circuit; and
Fig. 32 is a block diagram illustrating a configuration of an optical receiver for making polarization diversity self-coherent reception.

## Description of the Embodiments

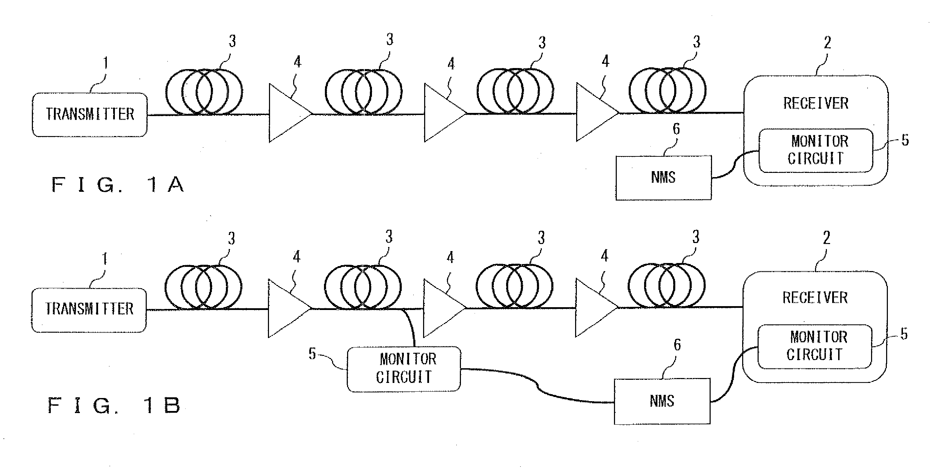

Fig. 1A and 1B are schematic diagrams illustrating a configuration of an optical communications system using a monitor device according to an embodiment. The optical communications system illustrated in Fig. 1 is configured by including an optical transmitter 1, an optical receiver 2, and an optical fiber transmission line 3 connecting the optical transmitter 1 and the optical receiver 2. One or a plurality of optical repeater stations (optical amplifiers) 4 may be provided on the transmission line 3.

An optical signal transmitted from the optical transmitter 1 is, for example, an optical PSK (Phase Shift Keying) signal, an optical QAM (Quadrature Amplitude Modulation) signal, or an optical FM (Frequency Modulation) signal although it is not particularly limited. Here, assume that PSK includes DPSK (Differential PSK). Also assume that the PSK signal is an mPSK signal, and "m" is $2^n$ (n=1, 2, 3, ...).

The optical receiver 2 includes a monitor circuit 5. The monitor circuit 5 monitors not only the state of the optical fiber transmission line 3 but also the quality of an optical signal transmitted via the optical fiber transmission line 3. The monitor circuit 5 may be provided only in the optical receiver 2 as illustrated in Fig. 1A, or provided in an arbitrary or all of optical repeater stations 4 as illustrated in Fig. 1B.

Results of the monitoring made by the monitor circuit 5 may be notified, for example, to a network management system (NMS) 6. The network management system 6 issues an alarm when the state of the optical fiber transmission line 3 or the quality of an optical signal deteriorates, and issues an instruction to change the system configuration if necessary. For example, if the optical fiber transmission line 3 is redundantly configured, the network management system 6 may switch between an active system and a standby system according to a notification made from the monitor circuit 5.

<First embodiment>

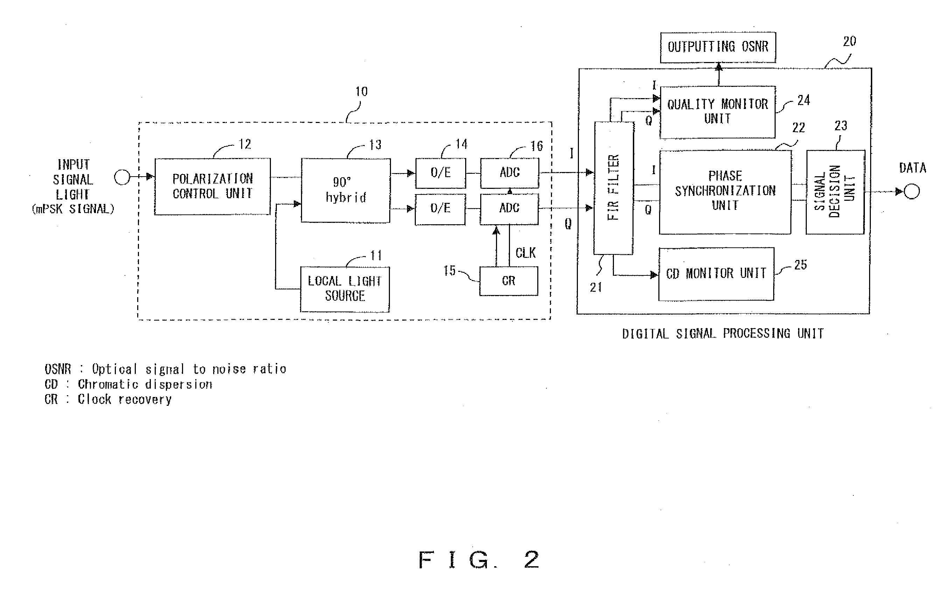

Fig. 2 is a block diagram illustrating a configuration of an optical receiver including a monitor circuit according to a first embodiment. This optical receiver is configured by including an optical reception circuit 10 for making coherent reception of an optical signal, and a digital signal processing unit (DSP) 20 provided at a stage succeeding the optical reception circuit 10. The monitor circuit is implemented with the digital signal processing unit 20 and this will be described in detail later. Here, assume that an input optical signal is an optical mPSK signal.

The optical reception circuit 10 includes a local light source 11, a polarization control unit 12, an optical hybrid unit 13, photo reception units 14, a clock recovery unit 15, and A/D converters 16. The local light source 11 generates a local light with almost the same frequency as that of an input light. The local light is, for example, continuous wave light. The polarization control unit 12 controls the polarization of the input light so that the polarizations of the input light and the local light match. The optical hybrid unit 13 combines the input light and the local light, and also combines the input light and the local light with a different optical phase by 90 degree from above one. As a result, an I-component optical signal and a Q-component optical signal are obtained.

The photo reception units 14 are respectively configured, for example, by including a photodiode, and respectively convert the I-component optical signal and the Q-component optical signal into electric signals. The clock recovery unit 15 recovers from an input signal a clock synchronous with the symbol rate of a signal transmitted by the signal light. The A/D converters 16 convert one pair of electric signals obtained from the photo reception units 14 into digital data by using the recovered clock. As a result, I-component data and Q-component data are obtained. Here, one pair of I-component data and Q-component data represents one complex number. Namely, the I-component data represents the value of a real part of a complex number, whereas the Q-component data represents the value of an imaginary part of the complex number. Additionally, the I-component data and the Q-component data represent the optical electric field (optical amplitude and optical phase) of an input optical signal. Namely, the optical reception circuit 10 generates optical electric field data of an input signal light with coherent reception.

"coherent reception" is not limited to the method using a local light as illustrated in Fig. 2, and assumed to include also self-coherent reception that does not use a local light. Namely, "coherent reception" is assumed to indicate a reception method by which optical amplitude information and optical phase information is obtained.

The digital signal processing unit 20 includes an FIR filter 21, a phase synchronization unit 22, a signal decision unit 23, a quality monitor unit 24, and a CD monitor unit 25. The digital signal processing unit 20 may be realized with a general-purpose processor.

The FIR filter 21, to which optical electric field data (I-component data and Q-component data) are input from the optical reception circuit 10, performs a filter computation to equalize an optical signal for the optical electric field data. In this embodiment, the dispersion (especially, chromatic dispersion) of the optical fiber transmission line 3 is compensated in the filter computation performed by the FIR filter 21. Namely, the inverse property of the dispersion is provided to the optical electric field data.

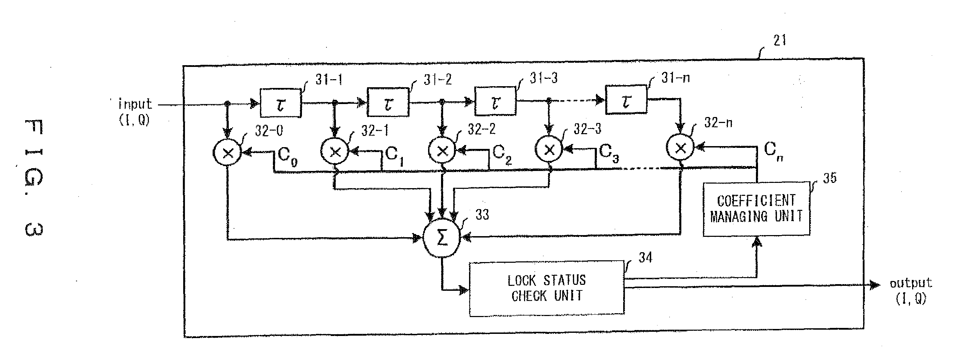

Fig. 3 is a block diagram illustrating an example of the FIR filter 21. The FIR filter 21 includes delay elements 31-1 to 31-n, multiplying units 32-0 to 32-n, an adding unit 33, a lock status check unit 34, and a coefficient managing unit 35.

The delay elements 31-1 to 31-n are connected in series, and respectively delay an input signal by a time $\tau$. Accordingly, signals that are delayed by $\tau$ to $n^x\tau$ are obtained with the delay elements 31-1 to 31-n. The multiplying unit 32-0 multiplies the input signal by a coefficient $C_0$. The multiplying unit. 32-1 multiples the output signal of the delay element 31-1 by a coefficient $C_1$. Similarly, each of the multiplying units 32-2 to 32-n multiplies the output signal of the corresponding one of the delay elements 31-2 to 31-n by the corresponding one of coefficients $C_2$ to $C_n$.

The coefficients $C_0$ to $C_n$ are weighting coefficients to compensate for the waveform distortion (such as an influence exerted by the cumulative chromatic dispersion of the optical fiber transmission line 3) of the input signal. Here, assume that the coefficients $C_0$ to $C_n$ are predetermined on the basis of a measurement, a simulation, etc., and managed by the coefficient managing unit 35.

The adding unit 33 adds up the results of the multiplications made by the multiplying units 32-0 to 32-n. The lock status check unit 34 determines, on the basis of the results of the addition obtained by the adding unit 33, whether or not a recovered clock is locked. The recovered clock is determined to be locked, for example, if the state of the recovered clock falls within a predetermined range in a predetermined time period.

The coefficient managing unit 35 holds a plurality of sets of coefficients $C_0$ to $C_n$. The coefficient managing unit 35 outputs the first set of coefficients $C_0$ to $C_n$ at the start of operations, and references the result of the determination obtained by the lock status check unit 34. If the recovered clock is determined not to be locked at this time, the coefficient managing unit 35 changes the coefficients $C_0$ to $C_n$. The coefficient managing unit 35 sequentially changes the coefficients $C_0$ to $C_n$ until the lock status check unit 34 detects the recovered clock is locked. Since the configuration and the operations of the FIR filter are a known technique, their detailed explanations are omitted.

Turning back to Fig. 2, the phase synchronization unit 22 performs, for the optical electric field data equalized by the FIR filter 21, a computation to compensate for the frequency offset of an optical signal, and a computation to synchronize a phase. The frequency offset represents a difference between the frequencies of the input light and the local light. In a phase synchronization process, a phase error of optical electric field data is initially calculated. The phase error is obtained, for example, by raising the optical electric field data to the m-th power. "m" is "m" of mPSK modulation. Then, phase-synchronized optical electric field data is obtained by subtracting the phase error from the optical electric field data. The signal decision unit 23 decides data for each symbol by comparing one pair of data obtained by the phase synchronization unit 22 with threshold values respectively.

The configurations and the operations of the phase synchronization unit 22 and the signal decision unit 23 are not particularly limited, and may be implemented with a known technique. For example, they are recited in "Satoshi Tsukamoto, Yuta Ishikawa, and Kazuro Kikuchi, 'Optical Homodyne Receiver Comprising Phase and Polarization Diversities with Digital Signal Processing', European Conference On Optical Communication 2006".

The quality monitor unit 24 calculates an Optical Signal-to-Noise Ratio (OSNR) of an optical signal on the basis of the optical electric field data equalized by the FIR filter 21. The calculated optical signal-to-noise ratio is notified, for example, to the network management system 6 illustrated in Fig. 1. The CD monitor unit 25 calculates the chromatic dispersion of the optical fiber transmission line 3 by using the tap coefficients of the FIR filter 21 although they are not used in the first embodiment. The calculated chromatic dispersion value is notified, for example, to the network management system 6 illustrated in Fig. 1. Note that the optical electric field data is complex digital data that represents the I-component and the Q-component of the optical signal.

As described above, the monitor circuit according to the first embodiment is implemented with the FIR filter 21 and the quality monitor unit 24. The FIR filter 21 is used not only to recover data from a received signal but also to monitor the quality of an optical signal.

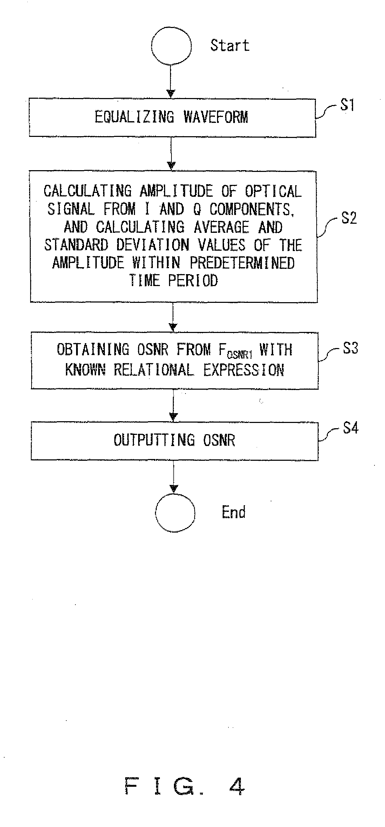

Fig. 4 is a flowchart illustrating the procedure for calculating the quality of an optical signal in the first embodiment. In step S1 an optical signal is equalized by using the FIR filter 21. Namely, the chromatic dispersion of the optical fiber transmission line 3 is compensated. Step S1 is executed, for example, each time the A/D converters 16 sample and output optical electric field data. In this case, the optical electric field data of the optical signal is sequentially generated at each sampling timing of the A/D converters 16.

In step S2, the amplitude (namely, the intensity) of the optical signal is calculated from the I-component and the Q-component of the optical electric field data. Assuming that the process of the flowchart illustrated in Fig. 4 is executed over a time period that is sufficiently long with respect to the sampling period of the A/D converters 16, a plurality of amplitude values are obtained. Then, the average value and the standard deviation value of the amplitude of the optical signal are calculated by using the plurality of amplitude values. Here, assume that the optical signal s equalized by the FIR filter 21 is represented with the following equation.

$$s_k = I_k + jQ_k \quad (k=1, 2, 3, \ldots, N$$

N is an arbitrary integer) Then, the average amplitude $\mu$ of the optical signal is represented with the following equation (1). Additionally, the standard deviation value $\sigma$ of the amplitude of the optical signal is represented with the following equation (2).

$$\mu = \frac{1}{N} \sum_{k=1}^{N} \sqrt{(I_k^2 + Q_k^2)} \qquad \ldots (1)$$

$$\sigma = \sqrt{\frac{1}{N} \sum_{k=1}^{N} \left( \sqrt{(I_k^2 + Q_k^2)} - \mu \right)^2} \qquad \ldots (2)$$

Furthermore, the following quality index $F_{OSNR1}$ is calculated by using the average amplitude $\mu$ and the standard deviation value $\sigma$.

$$F_{OSNR1} = \mu / \sigma$$

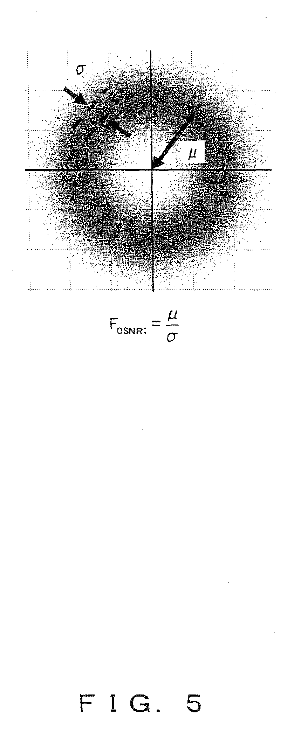

Fig. 5 is a schematic diagram illustrating the quality index $F_{OSNR1}$. The constellation illustrated in Fig. 5 represents the distribution when optical electric field data obtained within a predetermined time period is sampled (downsampling). In the first embodiment, phase synchronization is not performed for data provided to the quality monitor unit 24. Therefore, signal points represented on the constellation are distributed almost evenly in all of phases at almost constant amplitude.

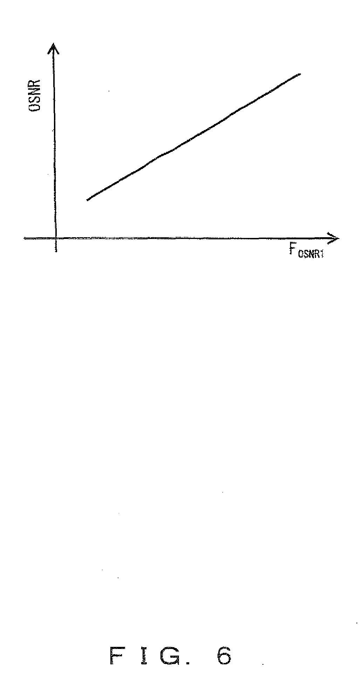

In step S3, an optical signal-to-noise ratio is obtained from the quality index $F_{OSNR1}$. Here, a relationship between the quality index $F_{OSNR1}$ and the optical signal-to-noise ratio is obtained in advance with a measurement, a simulation, etc. Assume that the optical signal-to-noise ratio is obtained uniquely from the quality index $F_{OSNR1}$ as illustrated in Fig. 6. Then, in step S4, the calculated optical signal-to-noise ratio is output. As described above, the amplitude of an optical signal is calculated from optical electric field information obtained with coherent reception, and an optical signal-to-noise ratio is calculated from the average value and the standard deviation of the amplitude in the monitor circuit according to the first embodiment.

<Second embodiment>

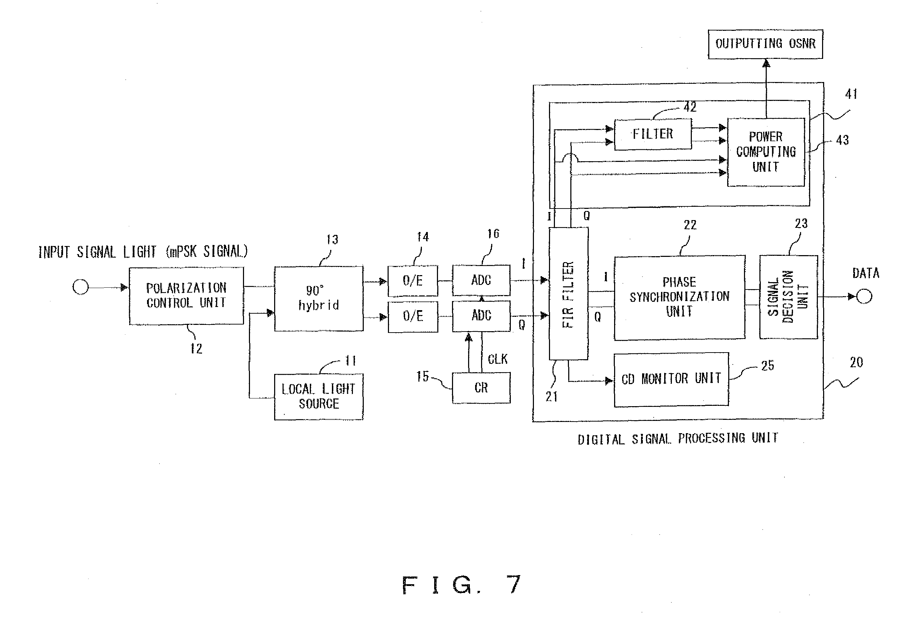

Fig. 7 is a block diagram illustrating a configuration of an optical receiver including a monitor circuit according to a second embodiment. The basic configuration of the monitor circuit according to the second embodiment is the same as the first embodiment illustrated in Fig. 2. Note that, however, a configuration and operations of a quality monitor unit 41 included in the monitor circuit according to the second embodiment are different from those of the quality monitor unit 24 in the first embodiment.

The quality monitor unit 41 includes a filter 42 and a power computing unit 43. The filter 42 is an LPF (Low Pass Filter) or a BPF (Band Pass Filter), and implemented, for example, with an FIR filter. If the filter 42 is implemented with an LPF, a cutoff frequency is set to, for example, about "$0.6 \times f_{sig}$". "$f_{sig}$" is the symbol rate of data transmitted by the optical signal. The BPF is designed to transmit a predetermined bandwidth on the low frequency side of "$f_{sig}$".

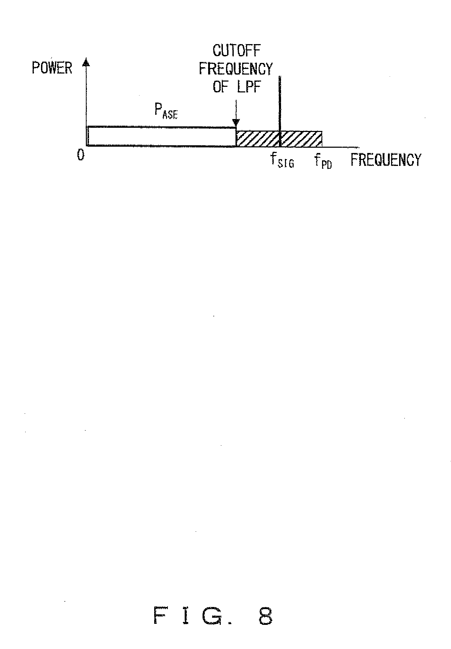

Fig. 8 is a schematic diagram illustrating the property of an LPF used as the filter 42. "$f_{sig}$" is the symbol rate of data transmitted by an optical signal as described above. "$f_{PD}$" is the frequency band of the photo reception units 14. When the optical electric field data is filtered by the LPF, only components on the frequency side lower than the cutoff frequency are left. Accordingly, the output of the LPF is equivalent to an ASE component.

The power computing unit 43 calculates a quality index $F_{OSNR2}$ by using the optical, electric field data output from the FIR filter 21, and the optical electric field data filtered by the filter 42. Here, the optical electric field data output from the FIR filter 21 represents the optical electric field of a received optical signal. In the meantime, the optical electric field data filtered by the filter 42 represents an ASE component (namely, a noise component).

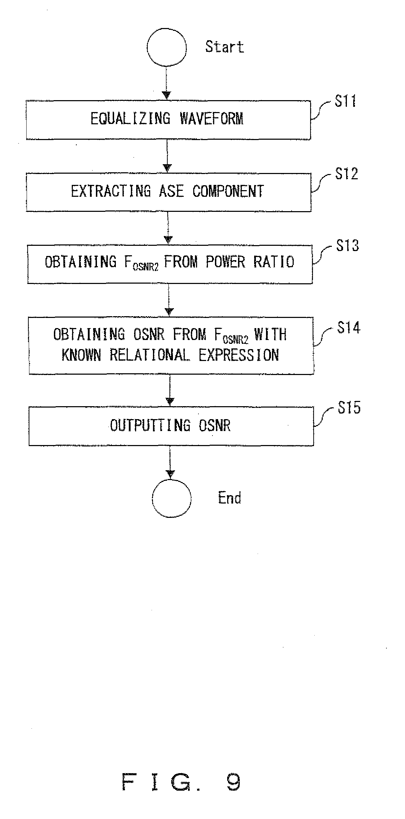

Fig. 9 is a flowchart illustrating the procedure for calculating the quality of an optical signal in the second embodiment. In step S11, an optical signal is equalized by using the FIR filter 21 in a similar manner as in step S1 of the first embodiment. In step S12, an ASE component is extracted with a filter computation by the filter 42.

In step S13, a quality index $F_{OSNR2}$ is calculated from the optical electric field data output from the FIR filter 21, and the optical electric field data filtered by the filter 42. Here, assume that the equalized optical signal s (namely, the output of the FIR filter 21) is represented with the following equation.

$$s_k = I_k + jQ_k \quad (k=1, 2, 3, \ldots, N$$

N is an arbitrary integer) Also assume that the signal $S_{filtered}$ filtered by the filter 42 is represented with the following equation.

$$s_{k\_filtered} = I_{k\_filtered} + jQ_{k\_filtered}$$

Then, the average power Pave of the optical signal including a data signal is calculated from "$S_k$", and the power $A_{ASE}$ of the ASE component is calculated from $S_{k\_filtered}$. Then, the quality index $F_{OSNR2}$ is obtained with the following equation (3).

$$F_{OSNR2} = \frac{P_{ave}}{P_{ASE}} = \frac{\dfrac{1}{N}\sum_{k=1}^{N}\left(I_k^2 + Q_k^2\right)}{\dfrac{1}{N}\sum_{k=1}^{N}\left(I_{k\_filtered}^2 + Q_{k\_filtered}^2\right)} \qquad \ldots (3)$$

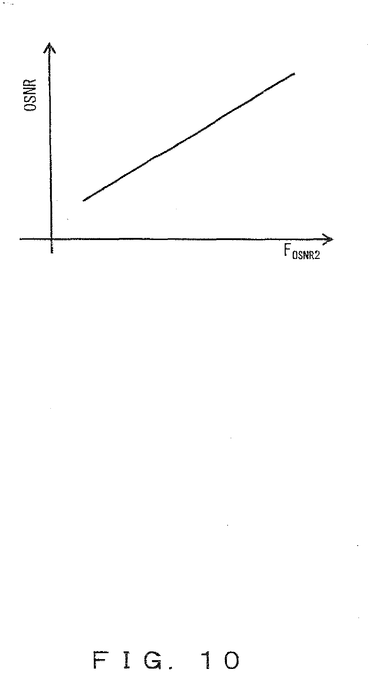

In step S14, an optical signal-to-noise ratio is obtained from the quality index $F_{OSNR2}$. Here, a relationship between the quality index $F_{OSNR2}$ and the optical signal-to-noise ratio is obtained in advance with a measurement, a simulation, etc. Assume that the optical signal-to-noise ratio is obtained uniquely from the quality index $F_{OSNP2}$ as illustrated in Fig. 10. Note that the relationship between the quality index $F_{OSNP2}$ and the optical signal-to-noise ratio is usually different from that between the quality index $F_{OSNR1}$ and the optical signal-to-noise ratio in the first embodiment. Then, in step S15, the calculated optical signal-to-noise ratio is output. As described above, an ASE component is extracted from optical electric field information obtained with coherent reception, and an optical signal-to-noise ratio is calculated from the power ratio of an optical signal to an ASE component in the monitor circuit according to the second embodiment.

<Third embodiment>

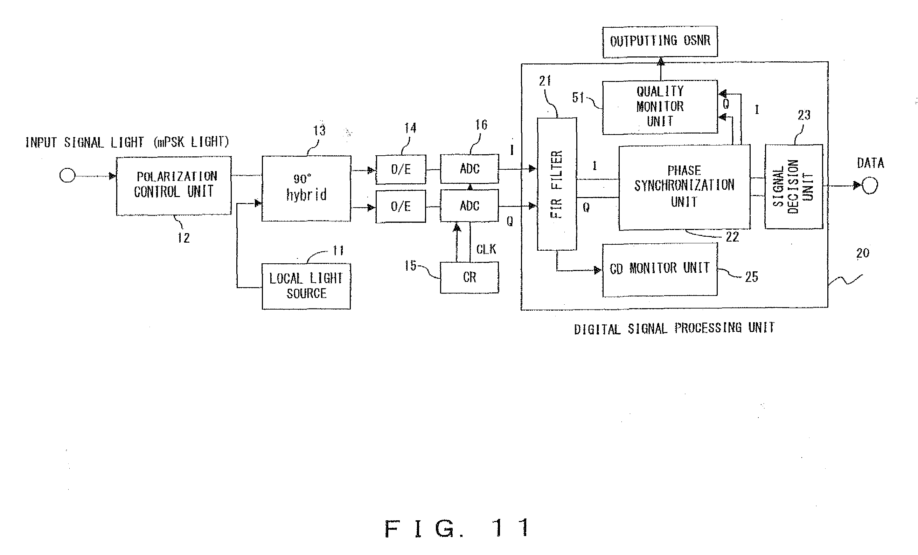

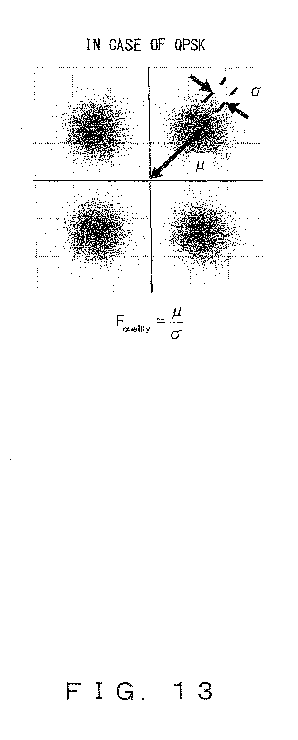

Fig. 11 is a block diagram illustrating a configuration of an optical receiver including a monitor circuit according to a third embodiment. The basic configuration of the monitor circuit according to the third embodiment is the same as the first embodiment illustrated in Fig. 2. Note that, however, a configuration and operations of a quality monitor unit 51 included in the monitor circuit according to the third embodiment are different from those of the quality monitor unit 24 in the first embodiment.
The quality monitor unit 51 receives the electric field data of an optical signal after being synchronized, the frequency offset of which is compensated and the phase error of which is removed by the phase synchronization unit 22. Then, the quality monitor unit 51 calculates a quality index $E_{quality}$ on the basis of the optical electric field data after being phase-synchronized.

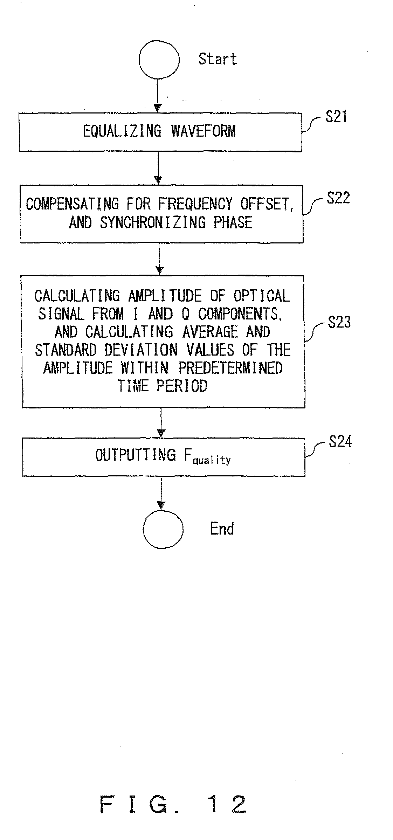

Fig. 12 is a flowchart illustrating the procedure for calculating the quality of an optical signal in the third embodiment. In step S21, an optical signal is equalized by using the FIR filter 21 in a similar manner as in step S1 of the first embodiment. In the third embodiment, step S21 is not an essential procedural step.
In step S22, the frequency offset of the optical signal is compensated for and its phase error is removed by the phase synchronization unit 22. Namely, phase synchronization is established. Accordingly, optical electric field data provided to the quality monitor unit 51 is distributed in the proximities of signal points having an amplitude and a phase, which correspond to a modulation method, as illustrated in Fig. 13. Fig. 13 illustrates the case where an optical QPSK signal is used. In this case, the optical electric field data is distributed in the proximities of four phases ($\pi/4$, $3\pi/4$, $5\pi/4$ $7\pi/4$).
In step S23, the amplitude (namely, the intensity) of the optical signal is calculated from the I-component and the Q-component of the optical electric field data after being phase-synchronized. Assuming that the process of the flowchart illustrated in Fig. 12 is executed over a predetermined time period that is sufficiently long with respect to the sampling period of the A/D converters 16, a plurality of amplitude values are obtained. Then, the average value of the amplitude of the optical signal is calculated by using the plurality of amplitude values. Moreover, the standard deviation value at each signal point is calculated. Here, assume that the optical signal s after being phase-synchronized is represented with the following equation.

$$s_k = I_k + jQ_k \quad (k=1, 2, 3, \ldots, N$$

N is an arbitrary integer) Then, the average amplitude $\mu$ of the optical signal is represented with the following equation (4). Additionally, the standard deviation value $\sigma$ at each signal point of the optical signal is represented with the following equation (5).

$$\mu = \frac{1}{N}\sum_{k=1}^{N}\sqrt{(I_k^2 + Q_k^2)} \qquad \ldots (4)$$

$$\sigma = \sqrt{\frac{1}{N}\sum_{k=1}^{N}\left\{(I_k - \bar{I})^2 + (Q_k - \overline{Q})^2\right\}} \qquad \ldots (5)$$

$$(\bar{I} = \frac{1}{N}\sum_{k=1}^{N}I_k \qquad \overline{Q} = \frac{1}{N}\sum_{k=1}^{N}Q_k)$$

In step S24, the following quality index Equality is calculated by using the average amplitude $\mu$ and the standard deviation value $\sigma$, which are obtained with the above provided equations.

$$F_{quality} = \mu/\sigma$$

In step S24, an evaluation value with high accuracy can be obtained in a short time if the average value of the quality index $F_{quality}$, which is obtained at each of signal points (for example, four points in QPSK), is calculated. Moreover, average power used in the second embodiment may be used as a replacement for the average amplitude $\mu$. As described above, the quality of an optical signal is calculated by using optical electric field information after being phase-synchronized in the monitor circuit according to the third embodiment.

<Fourth embodiment>

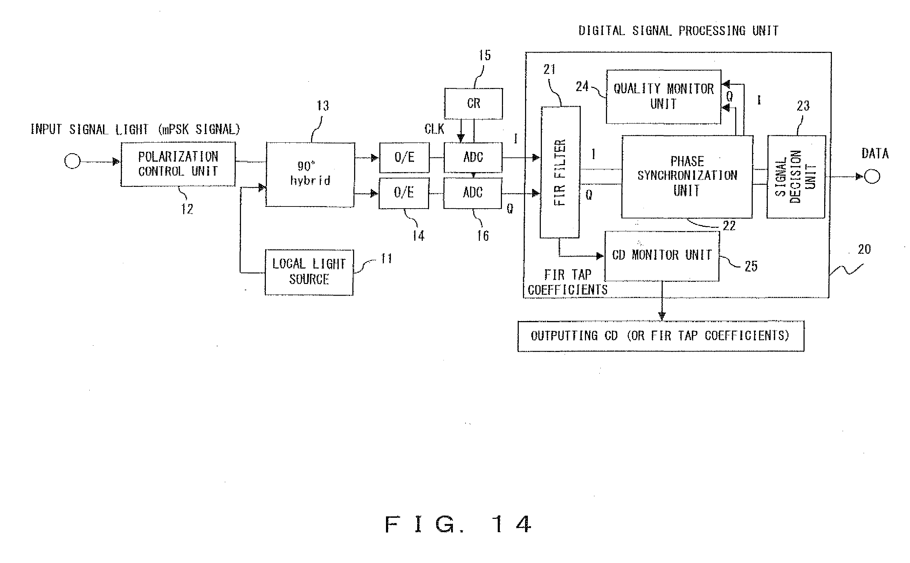

Fig. 14 is a block diagram illustrating a configuration of an optical receiver including a monitor circuit according to a fourth embodiment. The basic configuration of the monitor circuit according to the fourth embodiment is the same as the first embodiment illustrated in Fig. 2. Note that, however, a property of an optical fiber transmission line is detected by using the parameters of the FIR filter 21 in the monitor circuit according to the fourth embodiment. The optical receiver illustrated in Fig. 14 is a single polarization coherent receiver. An embodiment for detecting chromatic dispersion as one of properties of an optical fiber transmission line is described below.

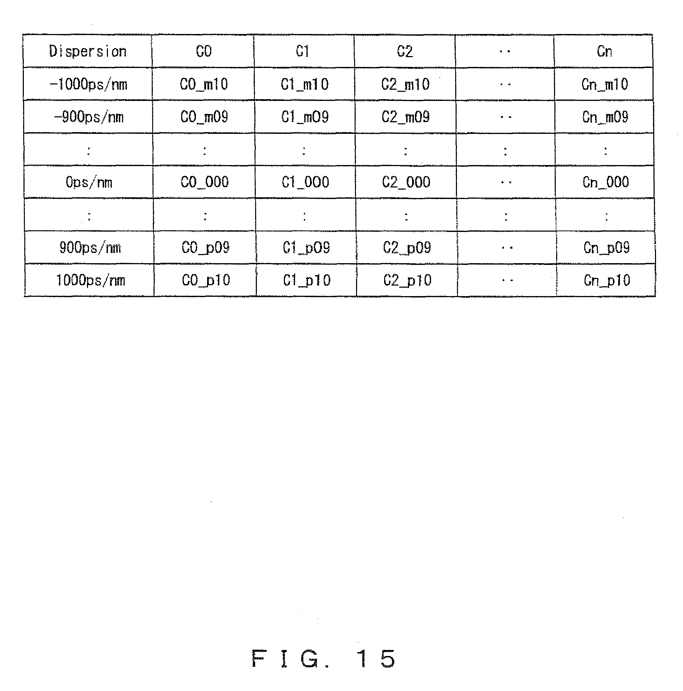

Fig. 15 is a diagram illustrating a structure of a tap coefficient parameter table possessed by the FIR filter 21. The tap coefficient table stores tap coefficients to compensate for chromatic dispersion for each of a plurality of chromatic dispersion values. The tap coefficients $C_0$ to $C_n$ to compensate for chromatic dispersion in a range from -1000 ps/nm to 1000 ps/nm are stored in the example illustrated in Fig. 15. Specifically, for example, if "$C_0$==C0_m10" to "$C_n$=Cn_m10" are set for the FIR filter 21 in the case where the chromatic dispersion of the optical fiber transmission line is "-1000 ps/nm", the chromatic dispersion is compensated for with an FIR filter computation.

Assuming that the length of an optical fiber with chromatic dispersion of $\beta_2[s^2/m]$ is L[m], a transfer function H of the optical fiber is represented with the following equation (6).

$$H(\omega) = \exp\ (-j\omega^2\beta_2 L/2)\ \ ...(6)$$

Then, a transfer function for compensating for the chromatic dispersion is represented with the following equation (7).

$$H^{-1}(\omega) = \exp\ (j\omega^2\beta_2 L/2)\ \ ...(7)$$

The tap coefficients to make such compensation are provided with the following equation (8). "Ts" is the inverse number of the sampling frequency.

$$c_k = \frac{1}{2\pi}\int_{-\pi}^{\pi}\exp\left[j(\frac{\omega}{T_s})^2\beta_2 L/2 + j\omega k\right]d\omega \qquad ...(8)$$

For example, if the chromatic dispersion of the optical fiber transmission line is "-1000 ps/nm", "C0_m10" to "Cn_m10" are obtained by substituting "-1000 ps/nm" for $\beta_2$", and providing "0, 1, 2, ..., n" sequentially to "k" in the equation (8). The tap coefficients $C_o$ to $C_n$ may be obtained with such a calculation, or with a measurement, a simulation, etc.

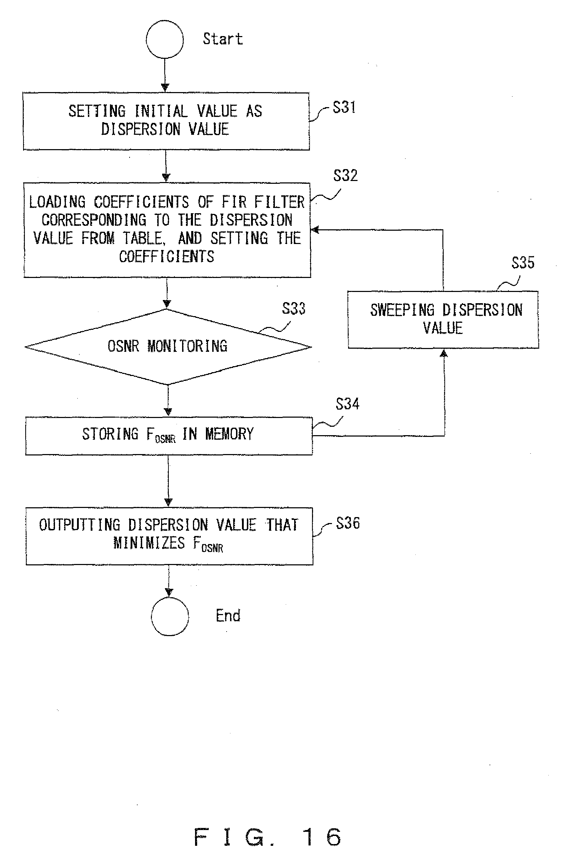

Fig. 16 is a flowchart illustrating the procedure for calculating a property of the optical fiber transmission line in the fourth embodiment. In step S31, an initial value that is predetermined as a chromatic dispersion value is set. Here, one of the chromatic dispersion values registered in the tap coefficient table illustrated in Fig. 15 is selected.

In step S32, the tap coefficients $C_0$ to $C_n$, which correspond to the set chromatic dispersion value, are extracted from the tap coefficient table, and provided to the FIR filter 21. Then, the FIR filter 21 performs a filter computation for an input signal by using the provided tap coefficients. When the tap coefficients corresponding to, for example, "-1000 ps/nm" are provided at this time, the FIR filter 21 performs a computation to compensate for "-1000 ps/nm".

In step S33, an optical signal-to-noise ratio is monitored by using the output data of the FIR filter 21. Monitoring of the optical signal-to-noise ratio is made, for example, in accordance with any of the first to third embodiments although it is not particularly limited. Namely, a quality index $F_{OSNR}$ (an arbitrary one or a plurality of $F_{OSNR1}$, $F_{OSNR2}$, and $F_{quality}$) is calculated. In step S34, the calculated quality index $F_{OSNR}$ is stored in a memory.

In step S35, the processes in steps S32 to S34 are repeatedly executed while sweeping a chromatic dispersion value to be compensated for. Namely, the tap coefficients corresponding to each chromatic dispersion within the range from -1000 ps/nm to 1000 ps/nm are sequentially set in the FIR filter 21, and the quality index $F_{OSNR}$ is obtained in this embodiment.

Then, in step S36, a chromatic dispersion value that makes the quality index $F_{OSNR}$ best is output. Assuming that the quality index $F_{OSNR}$ becomes best when the tap coefficients corresponding to "-900 ps/nm" are provided to the FIR filter 21, the actual chromatic dispersion of the optical fiber transmission line is estimated to be "-900 ps/nm".

Specifically, the chromatic dispersion value of the optical fiber transmission line is obtained, for example, with the following procedure. Firstly, for instance, "-1000 ps/nm" is selected as an initial value from the tap coefficient table, and its corresponding tap coefficients "C0_m10" to "Cn_m10" are extracted. These tap coefficients are set in the FIR filter 21 to perform a filter computation. Then, an optical signal-to-noise ratio is calculated and stored as "F(-1000)" in the memory.

Next, "-900 ps/nm" is selected, and its corresponding tap coefficients "C0_m09" to "Cn_m09" are extracted. These tap coefficients are set in the FIR filter 21, and an optical signal-to-noise ratio is calculated and stored as "F(-900)" in the memory.

Similarly, the tap coefficients respectively corresponding to "-800 ps/nm" to "1000 ps/nm" are set in the FIR filter 21, and corresponding optical signal-to-noise ratios are calculated and stored respectively as "F(-800)" to "F(1000)" in the memory. Then, a value that makes the quality of the optical signal best among "F(-1000)" to "F(2000)" is output. This procedure does not require the calculation of an optical signal-to-noise ratio for all of the chromatic dispersion values registered in the tap coefficient table.

As described above, tap coefficients that make the quality of an optical signal best are searched while changing the tap coefficients of the FIR filter for equalizing an optical signal in the monitor circuit according to the fourth embodiment. Then, the chromatic dispersion value corresponding to the searched tap coefficients is obtained as a property of the optical fiber transmission line.

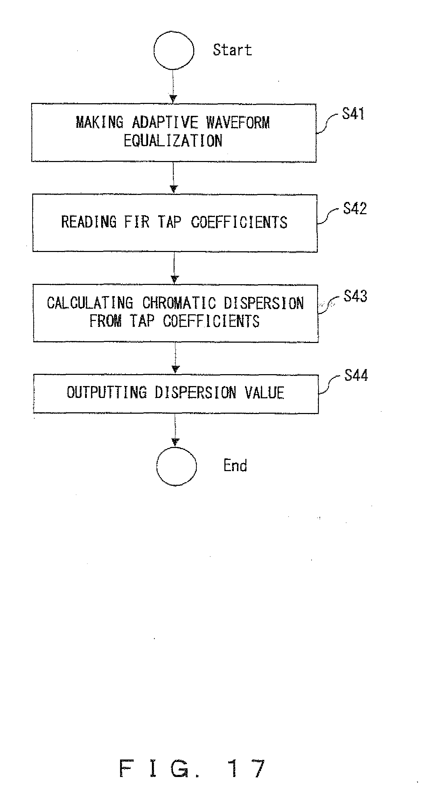

Fig. 17 is a flowchart illustrating another procedure executed in the fourth embodiment. With this procedure, adaptive waveform equalization is performed in step S41. Namely, a state where the waveform of an optical signal is suitably equalized is searched while the coefficient managing unit 35 is switching among the sets of tap coefficients in the FIR filter 21. When the state where the waveform of the optical signal is suitably equalized is detected, the tap coefficients $C_0$ to $C_n$ at that time are read from the tap coefficient table in step S42.

In step S43, a chromatic dispersion value is calculated from the read tap coefficients $C_0$ to $C_n$. Namely, chromatic dispersion $\beta_2$ is calculated from the tap coefficients $C_0$ to $C_n$ by solving the inverse function of the above provided equation (8). Then, in step S44, the calculated chromatic dispersion value is output. This procedure eliminates the need for sweeping the entire chromatic dispersion range registered in the tap coefficient table, thereby reducing the computation amount.

<Fifth embodiment>

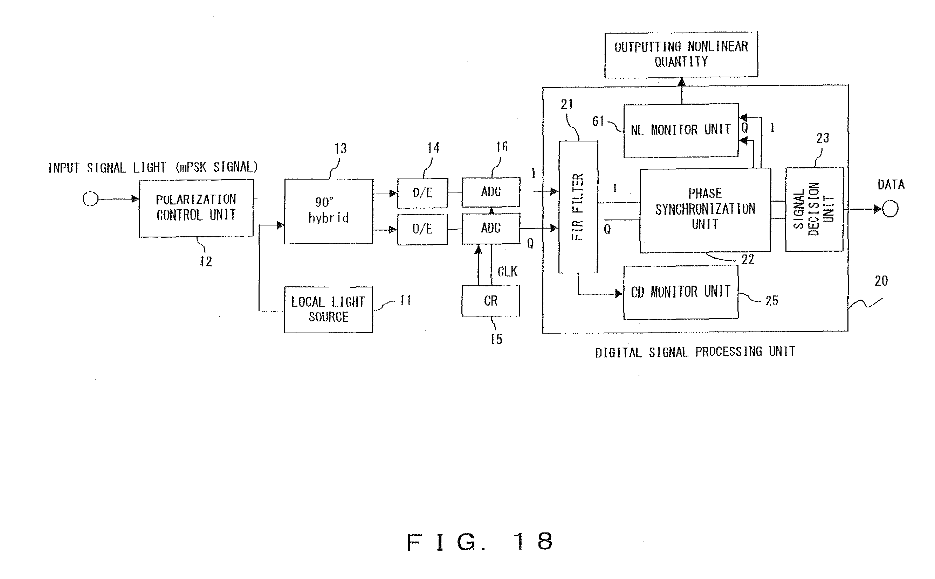

Fig. 18 is a block diagram illustrating a configuration of an optical receiver including a monitor circuit according to a fifth embodiment. The basic configuration of the monitor circuit according to the fifth embodiment is the same as the third embodiment illustrated in Fig. 11. Note that, however, a nonlinear quantity is monitored on the basis of the ratio of an amplitude deviation to a phase deviation of an optical signal by using a nonlinear quantity monitor unit 61 in the monitor circuit according to the fifth embodiment.

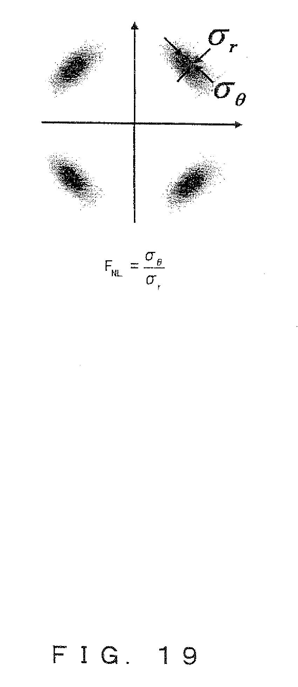

Fig. 19 is a schematic diagram illustrating the nonlinear quantity calculated in the fifth embodiment. Here, the distribution of optical electric field data after an optical QPSK modulation signal is phase-synchronized is illustrated. In the fifth embodiment, the nonlinear quantity $F_{NL}$ is defined with the ratio of a standard deviation $\sigma_r$ in amplitude to a standard deviation $\sigma_\theta$ in phase.

The nonlinear quantity $F_{NL}$ is calculated by the nonlinear quantity monitor unit 61 on the basis of the optical electric field data after being phase-synchronized, which is output from the phase synchronization unit 22. Here, assume that the optical signals after being phase-synchronized is represented with the following equation.

$$s_k = I_k + jQ_k \quad (k=1, 2, 3, ..., N$$

N is an arbitrary integer)

Then, the average amplitude and the average phase are represented with the following equations (9) and (10) respectively.

$$r = \frac{1}{N}\sum_{k=1}^{N}\sqrt{(I_k^2 + Q_k^2)} \qquad \qquad ...(9)$$

$$\theta = \frac{1}{N}\sum_{k=1}^{N}\tan^{-1}\left(\frac{Q_k}{I_k}\right) \qquad \qquad ...(10)$$

In this case, the standard deviation $\sigma_r$ in amplitude of the optical signal, and the standard deviation $\sigma_\theta$ in phase of the optical signal are represented with the following equations (11) and (12) respectively.

$$\sigma_r = \sqrt{\frac{1}{N}\sum_{k=1}^{N}\left(\sqrt{(I_k^2 + Q_k^2)} - r\right)^2} \qquad \qquad ...(11)$$

$$\sigma_\theta = \sqrt{\frac{1}{N}\sum_{k=1}^{N}\left(\tan^{-1}\left(\frac{Q_k}{I_k}\right)-\theta\right)^2} \qquad \dots(12)$$

Then, the nonlinear quantity monitor unit 61 calculates the nonlinear quantity $F_{NL}$ with the following equation.

$$F_{NL}=\sigma_\theta/\sigma_r$$

As described above, the nonlinear quantity is calculated from optical electric field information obtained with coherent reception in the monitor circuit according to the fifth embodiment.

<Sixth embodiment>

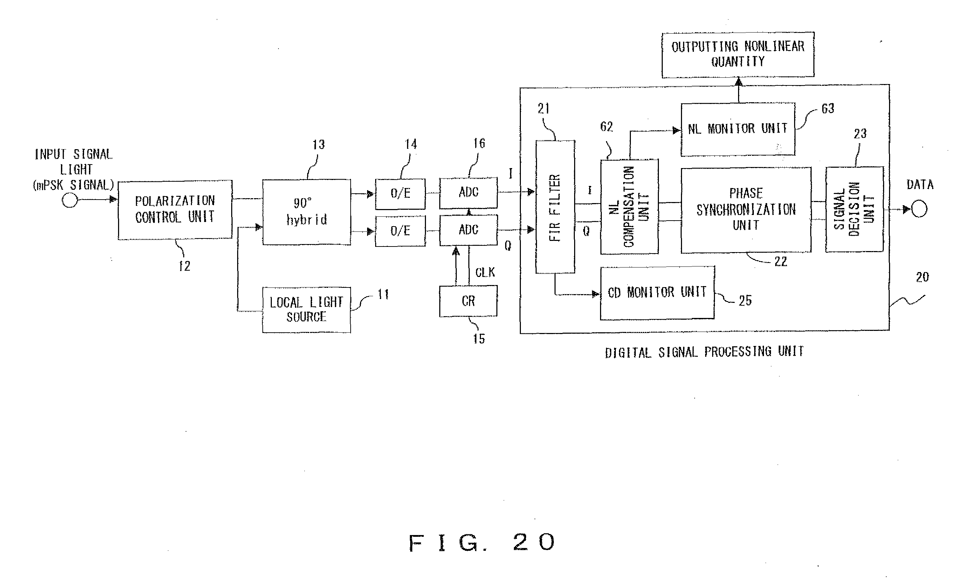

Fig. 20 is a block diagram illustrating a configuration of an optical receiver including a monitor circuit according to a sixth embodiment. The basic configuration of the monitor circuit according to the sixth embodiment is the same as the fifth embodiment illustrated in Fig. 18. Note that, however, the monitor circuit according to the sixth embodiment includes a nonlinear compensation unit 62 for compensating for a nonlinear distortion. The nonlinear compensation unit 62 is provided between the FIR filter 21 and the phase synchronization unit 22, or provided at a stage succeeding the phase synchronization unit 22.

The nonlinear compensation unit 62 compensates for nonlinearity by performing a nonlinear compensation algorithm computation for optical electric field data output from the FIR filter 21. The nonlinear compensation algorithm is expressed, for example, with a function $\theta_c$ represented with, the following equation (12).

$$\theta_c(r)=c_2r^2+c_1r+c_0 \quad \dots(12)$$

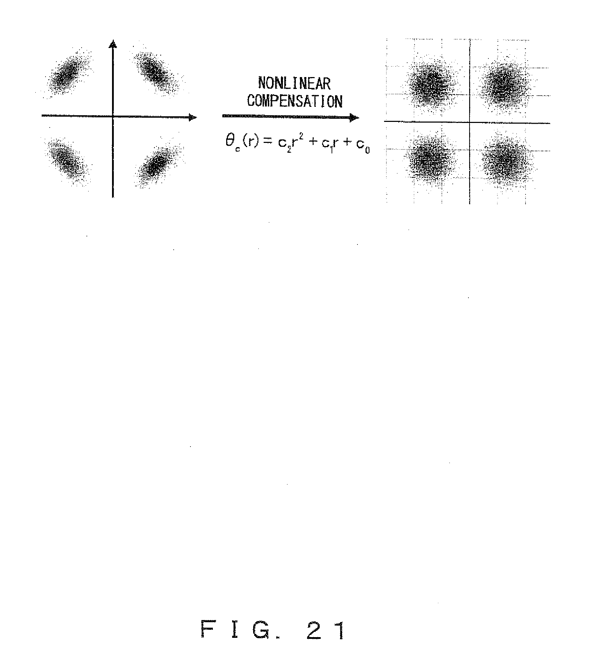

Fig. 21 is a schematic diagram illustrating the nonlinear compensation made by the nonlinear compensation unit 62. A nonlinear effect on an optical phase grows with an increase in an optical amplitude although this is not depicted accurately in Fig. 21. Here, the function $\theta_c$ rotates the phase of optical electric field data in accordance with the amplitude of the optical electric field data provided to the nonlinear compensation unit 62. Then, the nonlinear compensation unit 62 determines the coefficients $c_2$ to $c_0$ of the function $\theta_c$ so that the dispersion of a phase noise is minimized. The technique for performing a nonlinear compensation by using the equation (12) is a known technique, and recited in detail, for example, in the following document.
"Signal Design and Detection in Presence of Nonlinear Phase Noise", Alan Pak Tao Lau and Joseph Kahn, Journal of Lightwave Technology Vol. 25, No. 10, October 2007 p3008-3016
A nonlinear quantity monitor unit 63 obtains the coefficients $c_2$ to $c_0$ determined by the nonlinear compensation unit 62. Then, the nonlinear quantity monitor unit 63 calculates a nonlinear quantity from the obtained coefficients $c_2$ to $c_0$. Namely, a relationship between the optical amplitude r and the optical phase $\theta$ is acquired by providing the obtained coefficients $c_2$ to $c_0$ to the equation (12). As a result, the nonlinear quantity is obtained.
The above first to sixth embodiments have been described by assuming that the optical signal transmitted via the optical fiber transmission line is an mPSK signal (especially, a QPSK signal). However, the present invention is not limited to these implementations. Namely, the monitor circuits according to the embodiments are applicable to not only an mPSK signal but also, for example, a QAM signal, etc. The monitor circuits according to the embodiments are also applicable to RZ, NRZ, CSRZ (Carrier Suppressed RZ), and duo binary (PSBT: Phase Shaped Binary Transmission).

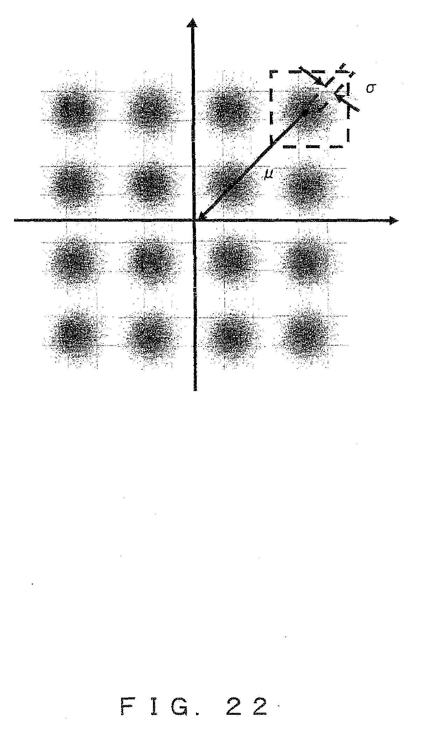

Fig. 22 is a schematic diagram illustrating a method for monitoring the quality of a 16QAM signal. Here, the example where an optical signal-to-noise ratio is calculated on the basis of the average amplitude and the standard deviation $\sigma$ of an optical signal is illustrated. In this case, the standard deviation $\sigma$ is calculated for each signal point. The standard deviation $\sigma$ is calculated, for example, with the above provided equation (5). Moreover, the average amplitude $\mu$ is calculated for the signal point farthest from the origin point. The average amplitude $\mu$ is calculated, for example, with the above provided equation (4). Then, the optical signal-to-noise ratio of the 16QAM signal is obtained on the basis of "$\mu/\sigma$". The quality index may be calculated by using an average power as a replacement for the average amplitude $\mu$.
Additionally, the digital signal processing unit 20 may include arbitrary two or more of the monitor circuits according to the first to the sixth embodiments. Namely, the digital signal processing unit 20 may monitor all of an optical signal-to-noise ratio, the chromatic dispersion of an optical fiber transmission line, and a nonlinear quantity. In this case, the monitor computations may be executed in parallel, or executed sequentially in a time-division manner. As described above, the monitor circuits according to the embodiments can calculate various indices (the quality of an optical signal, and properties of an optical fiber transmission line) by using optical electric field information obtained with coherent reception. Accordingly, there is no need to provide devices respectively dedicated to properties to be monitored, thereby downsizing and/or cost-cutting a monitor device for monitoring a plurality of types of properties.

Furthermore, the above described embodiments refer to a configuration where a monitor circuit is provided within an optical receiver for receiving an optical signal. However, the present invention is not limited to this configuration. Namely, the monitor circuit may be provided in an optical repeater, or the monitor circuit may monitor an optical signal branched at some halfway point of an optical fiber transmission line as described above with reference to Fig. 1.

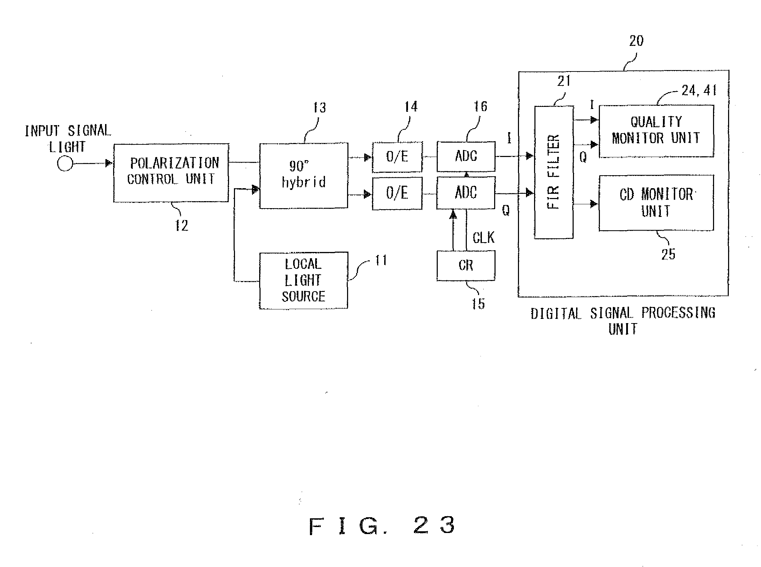

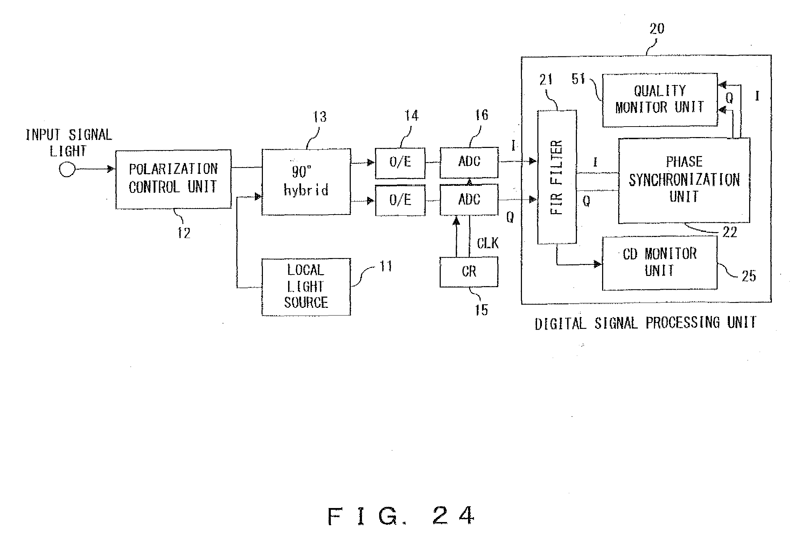

Figs. 23 and 24 are block diagrams illustrating configurations of a monitor circuit that does not have a data recovery function. These monitor circuits are provided, for example, in the optical repeater station 4 illustrated in Fig. 1. The configuration illustrated in Fig. 23 is equivalent, for example, to the first and the second embodiments, and performs monitoring on the basis of a signal the waveform of which is equalized (a signal before being phase-synchronized). In this case, the phase synchronization unit 22 and the signal decision unit 23, which are illustrated in Fig. 2, etc., are not required. In the meantime, the configuration illustrated in Fig. 24 is equivalent, for example, to the third embodiment, and performs monitoring on the basis of a signal after being phase-synchronized. In this case, the phase synchronization unit 22 is required although the signal decision unit 23 is not required.

<Polarization diversity reception>

The monitor circuits according to the above described first to sixth embodiments are also applicable to a polarization diversity receiver. Monitoring made in polarization diversity coherent reception is described below.

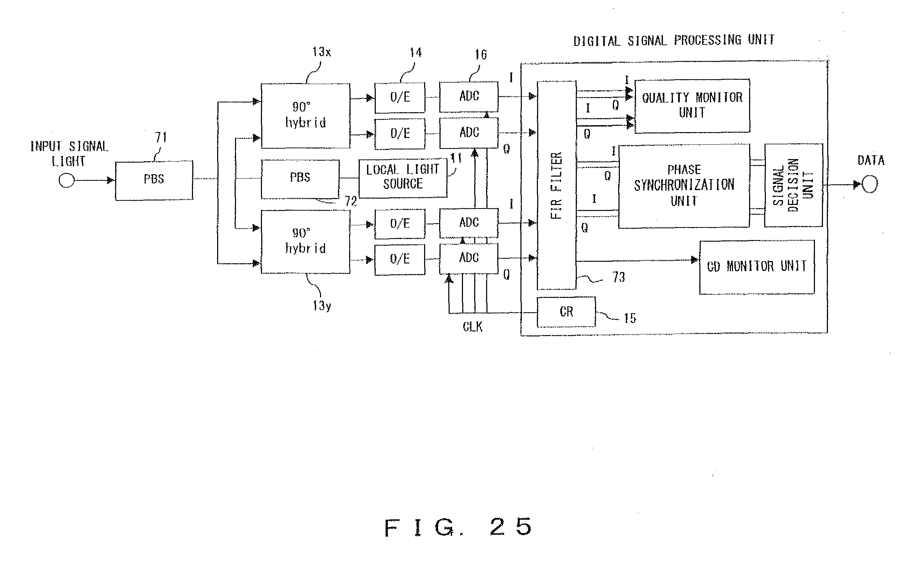

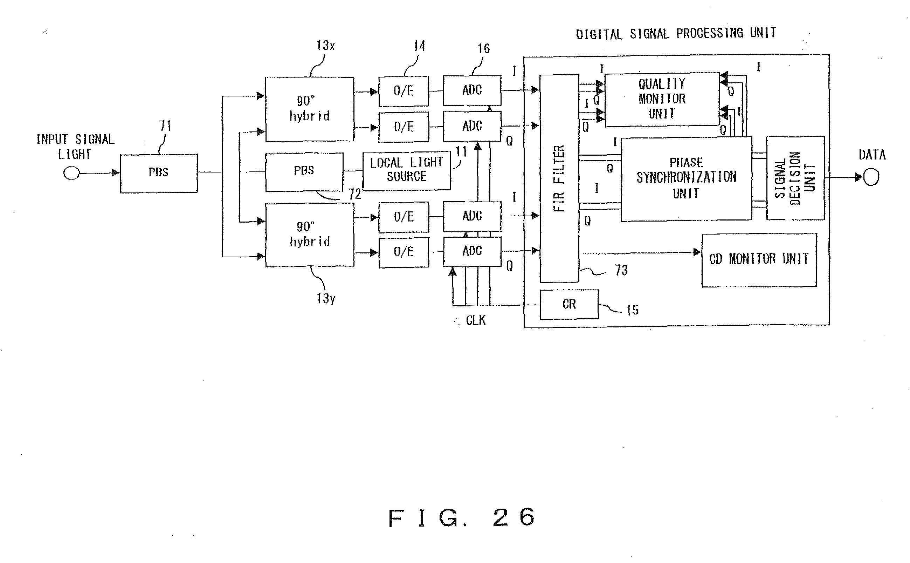

Figs. 25 and 26 are block diagrams illustrating configurations of a polarization diversity receiver including the monitor circuit according to any of the embodiments. The configuration illustrated in Fig. 25 performs monitoring on the basis of a signal before being phase-synchronized, whereas the configuration illustrated in Fig. 26 performs monitoring on the basis of a signal after being phase-synchronized.

In Fig. 25 or 26, a polarization beam splitter (PBS) 71 splits input signal light into X-polarization light and Y-polarization light. The X-polarization light and the Y-polarization light are guided to optical hybrid units 13x and 13y respectively. A polarization beam splitter 72 generates one pair of polarization lights, which are mutually orthogonal, from a local light generated by the local light source 11, and guides the generated lights to optical hybrid units 13x and 13y.

The optical hybrid unit 13x generates the I-component optical signal and the Q-component optical signal of the X-polarization light of the optical signal. Similarly, the optical hybrid unit 13y generates the I-component optical signal and the Q-component optical signal of the Y-polarization light of the optical signal. Operations of the photo reception units 14, the clock recovery units 15, and the A/D converters 16 are as described above with reference to Fig. 2.

To the digital signal processing unit 20, the optical electric field data of the X-poiarization light and that of the Y-polarization light are input. The monitor circuit according to the embodiment, which is implemented by the digital signal processing unit 20, can monitor, for example, Polarization Mode Dispersion (PMD), State Of Polarization (SOP), Polarization Dependent Loss (PDL), etc. in addition to the above described qualities and properties.

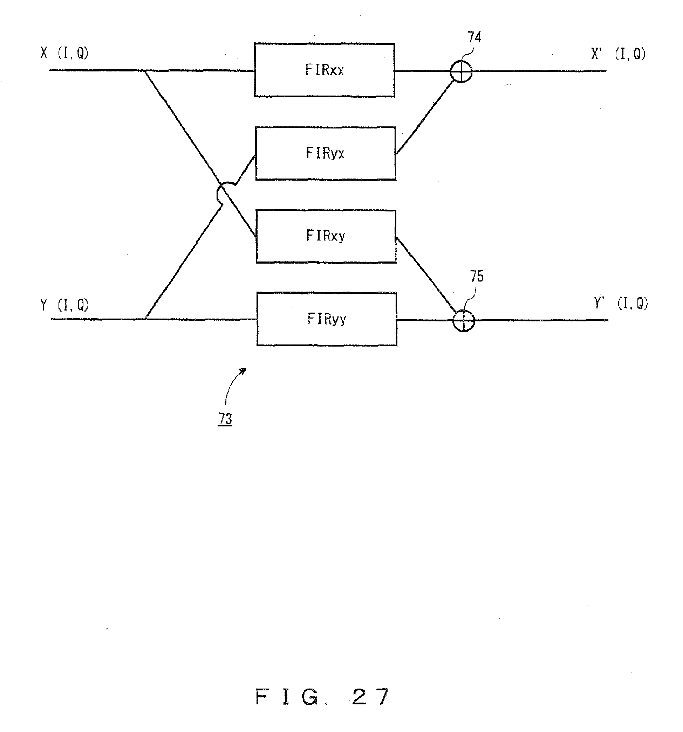

The FIR filter 73 is a butterfly FIR filter including four filter elements as illustrated in Fig. 27. A configuration and operations of each of the filter elements are basically the same as those of the FIR filter described with reference to Fig. 3. The optical electric field data of the X-polarization light is guided to the filter elements FIRxx and FIRxy. In contrast, the optical electric field data of the Y-polarization light is guided to the filter elements FIRyx and FIRyy. Then, the filter elements FIRxx and FIRyx make a filter computation to reject the Y-polarizatian component. Similarly, the filter elements FIRxy and the FIRyy make a filter computation to reject the X-polarization component. The filter operations of each of the filter elements are implemented by providing suitable tap coefficients as described above.

An adder 74 generates optical electric field data X' by adding up the results of the computations made by the filter elements FIRxx and the FIRyx. Similarly, an adder 75 generates optical electric field data Y' by adding up the results of the computations made by the filter elements FIRxy and the FIRyy.

Operations of the other elements of the digital signal processing unit 20 are basically the same as those in the single polarization coherent reception described with reference to Figs. 2 to 21. Note that, however, two sets of computations, each set equivalent to the computations performed in the single polarization coherent reception, are executed in the polarization diversity coherent reception.

The monitor circuit collects tap coefficients that are respectively provided to the filter elements of the FIR filter 73. Namely, the monitor circuit collects four sets of tap coefficients. As a result, the monitor circuit can calculate PMD, SOP, and PDL on the basis of the collected four sets of tap coefficients.

A method for monitoring SOP by using FIR tap coefficients is described as one example. Here, assume that incident polarization light H is represented with the following matrix.

$$H(\omega) = \begin{bmatrix} v_1 & v_2 \\ -v_2^* & v_1^* \end{bmatrix}$$

Then, the inverse matrix of the incident polarization light must be generated to demultiplex a polarization-multiplexed signal.

The inverse matrix of the incident polarization light is represented as follows.

$$H^{-1}(\omega) = \begin{bmatrix} v_1^* & -v_2 \\ v_2^* & v_1 \end{bmatrix}$$

This matrix $H^{-1}$ is implemented by the FIR filter 73. Namely, the computation made by the FIR filter 73 illustrated in Fig. 27 is represented with the following equation.

$$\begin{bmatrix} X' \\ Y' \end{bmatrix} = \begin{bmatrix} v_1^* & -v_2 \\ v_2^* & v_1 \end{bmatrix} \begin{bmatrix} X \\ Y \end{bmatrix}$$

where "v1*" and "-v2*" are equivalent to "FIRxx" and "FIRyx" respectively, and "v2*" and "v1" are equivalent to "FIRxy" and "FIRyy" respectively. This matrix $H^{-1}$ can be obtained by using a known adaptive equalization algorithm. Accordingly, the incident polarization state of the optical signal can be obtained by collecting the four sets of tap coefficients from the FIR filter 73.

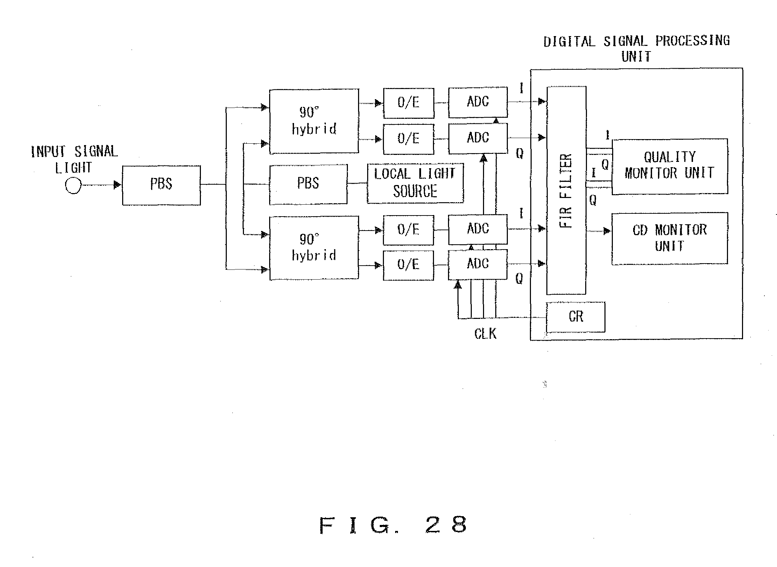

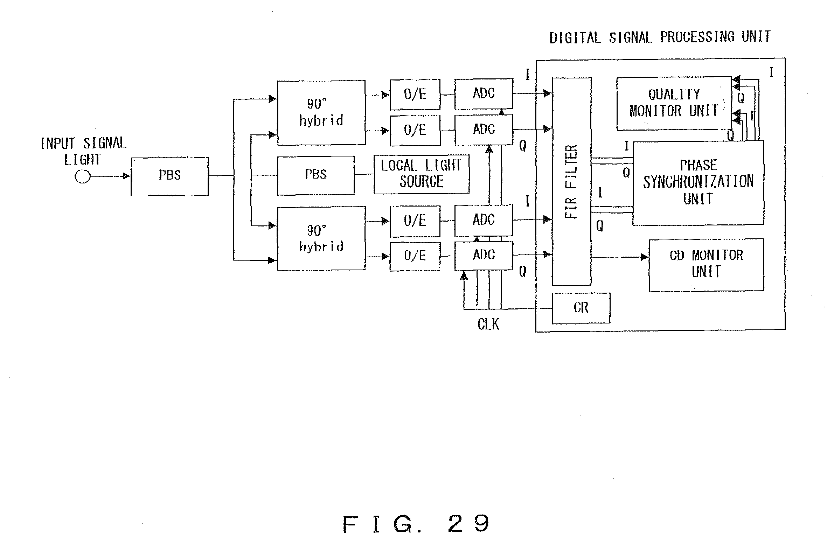

A monitor circuit that does not include a data recovery function can be provided even when polarization diversity reception is made. A configuration for performing monitoring on the basis of a waveform-equalized signal (namely, a signal before being phase-synchronized) is illustrated in Fig. 28. In the meantime, a configuration for performing monitoring on the basis of a signal after being phase-synchronized is illustrated in Fig. 29.

<Self-coherent reception>

The above described embodiment has referred to the configurations for performing coherent reception by using the local light generated by the local light source 11. In the meantime, self-coherent reception that detects the amplitude information and the phase information of an optical signal without using a local light is described below.

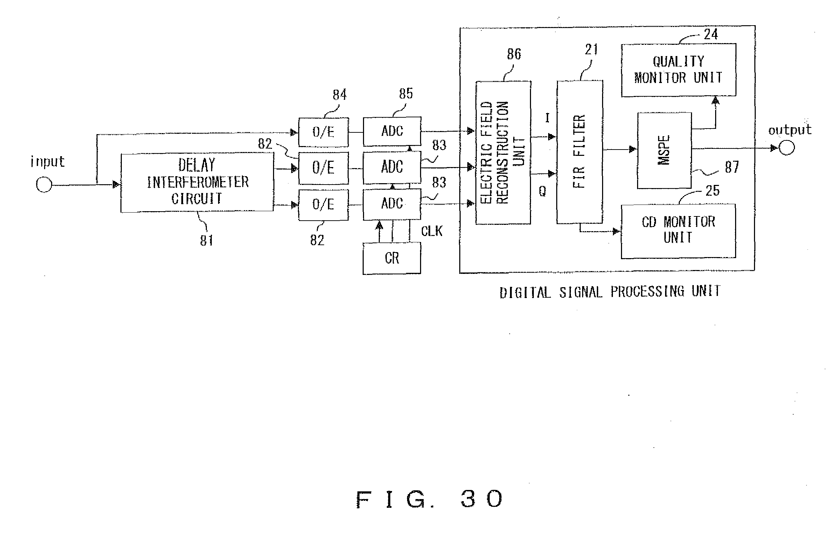

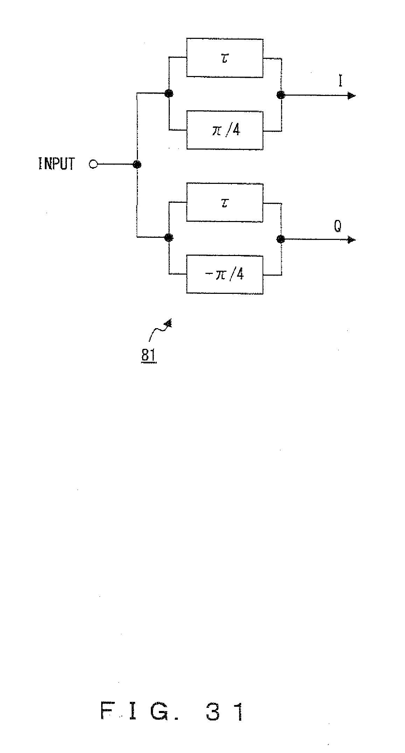

Fig. 30 is a block diagram illustrating a configuration of an optical receiver that performs self-coherent reception. In Fig. 30, input signal light is guided to a delay interferometer circuit 81 and a photo reception unit 84. The delay interferometer circuit 81 is configured, for example, by including two delay interferometers connected in parallel as illustrated in Fig. 31. One of the delay interferometers has a one-sample time delay element in a first arm, and a $\pi/4$ phase shift element in a second arm. The other delay interferometer has a one-sample time delay element in a first arm, and a $-\pi/4$ phase shift element in a second arm. With this configuration, I-component information and Q-component information can be obtained. Namely, differential phase information is detected from an input signal light. One pair of photo reception units 82 and one pair of A/D converters 83 are provided at stages subsequent to the delay interferometer circuit 81, and digital data that represents a differential phase is obtained. In the meantime, the input signal light is converted into an electric signal by the photo reception unit 84, and converted into digital data by an A/D converter 85. As a result, the amplitude information of the input optical signal is obtained.

An electric field reconstruction unit 86 reconstructs a complex electric field from the digital data provided from the A/D converters 83 and 85. Assuming that a received complex signal is "r(t)", the signal after being A/D-converted is represented with the following equation.

$$u(t) = u_I(t) + ju_Q(t) = r(t)r(t-\tau)^*$$

Additionally, the differential phase is represented with the following equation.

$$e^{j\Delta\phi(t)} = r(t)r(t-\tau)^* / \left| r(t)r(t-\tau)^* \right|$$
$$= u(t)/|u(t)|$$

Then, the complex electric field to be reconstructed is represented with the following equation.

$$r(n\tau) = \left| r(n\tau) \right| \prod_{m=1}^{n} e^{j\Delta\phi(m\tau)}$$

The reconstructed complex electric field data is passed to an MSPE (Multi-Symbol Phase Estimation) unit 87 after being filtered by the FIR filter 21. Assuming that the data output from the FIR filter 21 is "$r_{filtered}(t)$", the output data x of the MSPE unit 87 is represented with the following equation. Note that N (=1, 2, 3, ...) is the number of developed symbols, and "w" is a forgetting factor.

$$x(n) = r_{\_filtered}(n) x z(n-1)^*$$

$$z(n-1) = y(n-1) + \sum_{p=1}^{N} \left\{ w^p \prod_{q=1}^{p} \left[ y(n-1-q) e^{j\Delta\phi(n-q)} \right] \right\}$$

Basically, the operations of the quality monitor unit 24 and the CD monitor unit 25 are as described above. Additionally, the quality monitor unit 41, 51, etc. may be used as a replacement for the quality monitor unit 24. Namely, a monitor circuit provided in a coherent receiver using a local light is practically available also in an optical receiver that performs self-coherent reception.

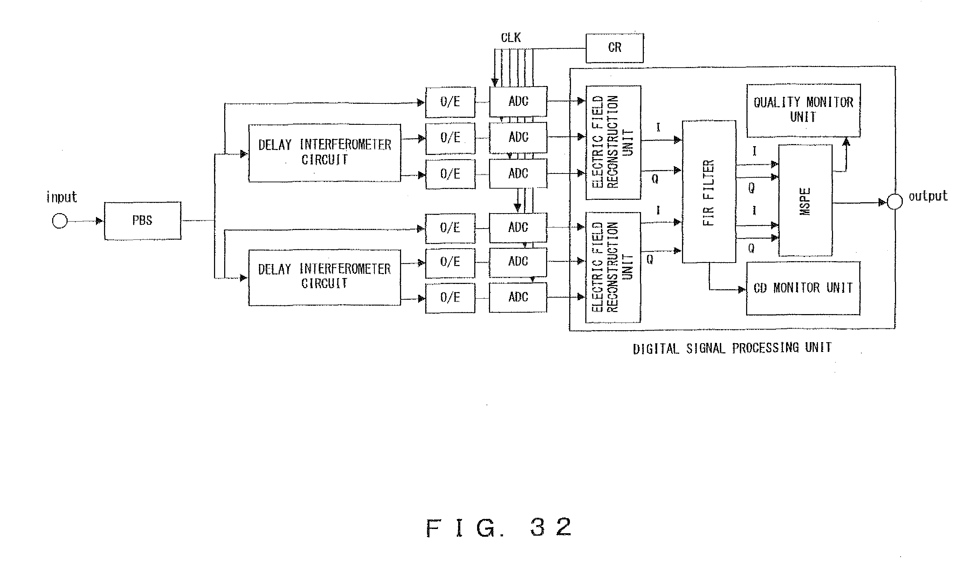

Furthermore, a self-coherent reception configuration can be introduced into a polarization diversity receiver. A configuration where the self-coherent reception is introduced into the polarization diversity receiver is illustrated in Fig. 32. In this configuration, for example, not only an optical signal-to-noise ratio but also polarization mode dispersion, a state of polarization, and a polarization-dependent loss can be monitored.

The above described embodiments refer to the cases where an FIR filter is used as one type of a digital equalization filter. However, an IIR filter, a nonlinear filter, etc. may be available as the digital equalization filter. Moreover, the tap coefficients referred to in the above described embodiments are to be understood generally as the operational parameters of a filter, which stipulate the transfer function of the filter.

Example 1: A monitor circuit used along with an optical reception circuit for performing coherent reception of an optical signal, comprising: a digital equalization filter for generating equalized electric field data by filter computation to equalize the optical signal, for electric field data of the optical signal, which is obtained with the coherent reception; and a quality calculating unit for calculating a quality of the optical signal on the basis of the equalized electric field data.

Example 2: The monitor circuit according to example 1, wherein the quality calculating unit calculates a signal-to-noise ratio of the optical signal on the basis of an average value and a standard deviation value of an amplitude of the optical signal, which are obtained from the equalized electric field data.

Example 3: The monitor circuit according to example 1, further comprising a digital bandpass filter for generating noise data by filter computation on the equalized electric field data to extract a noise component of the optical signal, wherein the quality calculating unit calculates a signal-to-noise ratio of the optical signal on the basis of power of the optical signal, which is obtained from the equalized electric field data, and noise power obtained from the noise data.

Example 4: The monitor circuit according to example 1, further comprising a correcting unit for performing a computation to compensate for a frequency offset of the optical signal and a computation to synchronize a phase of the optical signal, for the equalized electric field data, wherein the quality calculating unit calculates the quality of the optical signal on the basis of an average value and a standard deviation value of an amplitude of the optical signal, which are obtained from the electric field data corrected by the correcting unit.

Example 5: The monitor circuit according to example 1, further comprising a correcting unit for performing a computation to compensate for a frequency offset of the optical signal and a computation to synchronize a phase of the optical signal, for the equalized electric field data, wherein the quality calculating unit calculates nonlinearity of the optical signal on the basis of a standard deviation value of an amplitude of the optical signal, and a standard deviation value of a phase of the optical signal, which are obtained from the electric field data corrected by the correcting unit.

Example 6: The monitor circuit according to example 1, further comprising a nonlinear compensating unit for performing a computation to compensate for nonlinearity of the optical signal, for the equalized electric field data, wherein the quality calculating unit calculates the nonlinearity of the optical signal on the basis of coefficients used in the computation performed by the nonlinear compensating unit.

Example 7: A monitor circuit used along with an optical reception circuit for performing coherent reception of an optical signal transmitted via an optical fiber transmission line, comprising: a digital equalization filter for performing a filter computation to compensate for a property of the optical fiber transmission line, for electric field data of the optical signal, which is obtained with the coherent reception; and a property detecting unit for detecting the property of the optical fiber transmission line by using at least one parameter for determining a transfer function of the digital equalization filter to compensate for the property.

Example 8: The monitor circuit according to example 7, further comprising: a quality calculating unit for calculating a quality of the optical signal on the basis of the electric field data; a storing unit for storing a plurality of sets of parameters corresponding to property values of the optical fiber transmission line; and a controlling unit for setting the parameters, which are stored in the storing unit, in the digital equalization filter, wherein the property detecting unit outputs a property value corresponding to parameters that make the quality of the optical signal best.

Example 9: A monitor circuit used along with an optical reception circuit for performing polarization diversity coherent reception of an optical signal transmitted via an optical fiber transmission line, comprising: a plurality of digital equalization filters for performing a computation to compensate for a state change added to the optical signal in the optical fiber transmission line, for a pair of electric field data of the optical signal, which is obtained with the polarization diversity coherent reception; and a property detecting unit for detecting a property of the optical fiber transmission line according to parameters that are set to compensate for the state change in the plurality of digital equalization filters.

Example 10: An optical receiver, comprising: an optical reception circuit for performing coherent reception of an optical signal; a digital equalization filter for generating equalized electric field data by filter computation to equalize the optical signal, for electric field data of the optical signal, which is obtained with the coherent reception; and a quality calculating unit for calculating a quality of the optical signal on the basis of the equalized electric field data.

Example 11: The optical receiver according to example 10, wherein the optical reception circuit performs coherent reception of an input optical signal using local light.

Example 12: The optical receiver according to example 10, wherein the optical reception circuit is a self-coherent reception circuit comprising a delay phase interferometer.

Example 13: An optical receiver, comprising: an optical reception circuit for performing coherent reception of an optical signal transmitted via an optical fiber transmission line; a digital equalization filter for performing a filter computation to compensate for chromatic dispersion of the optical fiber transmission line, for electric field data of the optical signal, which is obtained with the coherent reception; and a property detecting unit for detecting a property of the optical fiber transmission line by using parameters set in the digital equalization filter to compensate for the chromatic dispersion.

## Claims

1. An optical receiver, comprising:

an optical reception circuit (10) adapted to perform coherent reception of an optical signal;
a digital equalization filter (21) adapted to generate equalized complex electric field data by filter computation to equalize the optical signal, according to complex electric field data of the optical signal, which is obtained with the coherent reception; and
a quality calculating unit (24, 43, 51, 61, 63) adapted to calculate a quality of the optical signal on the basis of the equalized complex electric field data.

2. The optical receiver according to claim 1, wherein
the optical reception circuit is adapted to perform coherent reception of an input optical signal using local light.

3. The optical receiver according to claim 1, wherein
the optical reception circuit is a self-coherent reception circuit comprising a delay phase interferometer.

FIG. 1A

FIG. 1B

OSNR : Optical signal to noise ratio
CD : Chromatic dispersion
CR : Clock recovery

F I G. 2

F I G. 3

Start

EQUALIZING WAVEFORM — S1

CALCULATING AMPLITUDE OF OPTICAL
SIGNAL FROM I AND Q COMPONENTS,
AND CALCULATING AVERAGE AND
STANDARD DEVIATION VALUES OF THE
AMPLITUDE WITHIN PREDETERMINED
TIME PERIOD — S2

OBTAINING OSNR FROM $F_{OSNR1}$ WITH
KNOWN RELATIONAL EXPRESSION — S3

OUTPUTTING OSNR — S4

End

F I G. 4

$$F_{OSNR1} = \frac{\mu}{\sigma}$$

F I G. 5

F I G. 6

OUTPUTTING OSNR

INPUT SIGNAL LIGHT (mPSK SIGNAL)

POLARIZATION CONTROL UNIT
12

90° hybrid
13

O/E
14

O/E

ADC
16

ADC

CLK

CR
15

LOCAL LIGHT SOURCE
11

I

Q

FILTER
42

POWER COMPUTING UNIT
41

43

I

Q

FIR FILTER
21

I

Q

PHASE SYNCHRONIZATION UNIT
22

SIGNAL DECISION UNIT
23

DATA

20

CD MONITOR UNIT
25

DIGITAL SIGNAL PROCESSING UNIT

F I G. 7

23

F I G. 8

Start

EQUALIZING WAVEFORM — S11

EXTRACTING ASE COMPONENT — S12

OBTAINING $F_{OSNR2}$ FROM POWER RATIO — S13

OBTAINING OSNR FROM $F_{OSNR2}$ WITH KNOWN RELATIONAL EXPRESSION — S14

OUTPUTTING OSNR — S15

End

F I G. 9

F I G. 1 0

F I G. 1 1

Start

EQUALIZING WAVEFORM — S21

COMPENSATING FOR FREQUENCY OFFSET, AND SYNCHRONIZING PHASE — S22

CALCULATING AMPLITUDE OF OPTICAL SIGNAL FROM I AND Q COMPONENTS, AND CALCULATING AVERAGE AND STANDARD DEVIATION VALUES OF THE AMPLITUDE WITHIN PREDETERMINED TIME PERIOD — S23

OUTPUTTING $F_{quality}$ — S24

End

F I G. 1 2

IN CASE OF QPSK

$$F_{quality} = \frac{\mu}{\sigma}$$

F I G. 1 3

F I G. 1 4

| Dispersion | C0 | C1 | C2 | . . | Cn |
|------------|------|------|------|------|------|
| −1000ps/nm | C0_m10 | C1_m10 | C2_m10 | . . | Cn_m10 |
| −900ps/nm | C0_m09 | C1_m09 | C2_m09 | . . | Cn_m09 |
| : | : | : | : | : | : |
| 0ps/nm | C0_000 | C1_000 | C2_000 | . . | Cn_000 |
| : | : | : | : | : | : |
| 900ps/nm | C0_p09 | C1_p09 | C2_p09 | . . | Cn_p09 |
| 1000ps/nm | C0_p10 | C1_p10 | C2_p10 | . . | Cn_p10 |

F I G. 1 5

Start

SETTING INITIAL VALUE AS DISPERSION VALUE — S31

LOADING COEFFICIENTS OF FIR FILTER CORRESPONDING TO THE DISPERSION VALUE FROM TABLE, AND SETTING THE COEFFICIENTS — S32

OSNR MONITORING — S33

SWEEPING DISPERSION VALUE — S35

STORING $F_{OSNR}$ IN MEMORY — S34

OUTPUTTING DISPERSION VALUE THAT MINIMIZES $F_{OSNR}$ — S36

End

F I G. 1 6

```
                    ( Start )
                        │
                        ▼
        ┌───────────────────────────────┐
        │   MAKING ADAPTIVE WAVEFORM     │⌐ S41
        │         EQUALIZATION           │
        └───────────────────────────────┘
                        │
                        ▼
        ┌───────────────────────────────┐
        │   READING FIR TAP COEFFICIENTS │⌐ S42
        └───────────────────────────────┘
                        │
                        ▼
        ┌───────────────────────────────┐
        │ CALCULATING CHROMATIC DISPERSION│⌐ S43
        │     FROM TAP COEFFICIENTS      │
        └───────────────────────────────┘
                        │
                        ▼
        ┌───────────────────────────────┐
        │   OUTPUTTING DISPERSION VALUE  │⌐ S44
        └───────────────────────────────┘
                        │
                        ▼
                     ( End )
```

F I G. 1 7

F I G. 18

$$F_{NL} = \frac{\sigma_\theta}{\sigma_r}$$

F I G. 1 9

F I G. 2 0

NONLINEAR
COMPENSATION

$$\theta_c(r) = c_2 r^2 + c_1 r + c_0$$

F I G. 2 1

F I G .  2 2

F I G. 2 3

INPUT SIGNAL
LIGHT ○ →

| POLARIZATION CONTROL UNIT | 12 |

| 90" hybrid | 13 |

| O/E | 14 |

| ADC | 16 |

| LOCAL LIGHT SOURCE | 11 |

| CR | 15 |

CLK

20

DIGITAL SIGNAL PROCESSING UNIT

21 51

| FIR FILTER | 21 |
| QUALITY MONITOR UNIT | 51 |
| PHASE SYNCHRONIZATION UNIT | 22 |
| CD MONITOR UNIT | 25 |

I Q

I Q

F I G. 2 4

F I G. 2 5

F I G . 2 6

EP 2 124 359 A1

F I G.  2 7

EP 2 124 359 A1

DIGITAL SIGNAL PROCESSING
UNIT

INPUT SIGNAL
LIGHT

PBS

90°
hybrid

O/E

ADC    I

PBS

LOCAL LIGHT
SOURCE

O/E

ADC

Q

90°
hybrid

O/E

ADC    I

O/E

ADC

Q

FIR FILTER

I
Q

QUALITY
MONITOR UNIT

I  Q

CD MONITOR
UNIT

CR

CLK

F I G.  2 8

F I G. 2 9

F I G. 3 0

F I G. 3 1

CLK

CR

input

PBS

DELAY INTERFEROMETER CIRCUIT

DELAY INTERFEROMETER CIRCUIT

O/E — ADC

O/E — ADC

O/E — ADC

O/E — ADC

O/E — ADC

O/E — ADC

ELECTRIC FIELD RECONSTRUCTION UNIT

ELECTRIC FIELD RECONSTRUCTION UNIT

I

Q

I

Q

FIR FILTER

I

Q

I

Q

MSPE

QUALITY MONITOR UNIT

CD MONITOR UNIT

output

DIGITAL SIGNAL PROCESSING UNIT

F I G.  3 2

Europäisches
Patentamt
European
Patent Office
Office européen
des brevets

## EUROPEAN SEARCH REPORT

Application Number

EP 09 17 0522

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/031633 A1 (HOSHIDA TAKESHI [JP] ET AL) 7 February 2008 (2008-02-07) * paragraph [0021] - paragraph [0022] * * paragraph [0040] - paragraph [0046] * * paragraph [0090] - paragraph [0097]; figure 1 * ----- | 1-3 | INV. H04B10/158 H04B10/08 |
| Y | US 2006/013597 A1 (CRIVELLI DIEGO E [AR] ET AL) 19 January 2006 (2006-01-19) * paragraph [0028] * * paragraph [0043] * * paragraph [0063]; figures 2,3 * ----- | 1-3 | |
| A | US 2005/019042 A1 (KANEDA NORIAKI [US] ET AL) 27 January 2005 (2005-01-27) * abstract; figure 2 * ----- | 1-3 | |

TECHNICAL FIELDS
SEARCHED       (IPC)

H04B

The present search report has been drawn up for all claims

| Place of search | Date of completion of the search | Examiner |
|---|---|---|
| Munich | 5 October 2009 | Phillips, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 124 359 A1

## ANNEX TO THE EUROPEAN SEARCH REPORT
## ON EUROPEAN PATENT APPLICATION NO.

EP 09 17 0522

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2009

| Patent document cited in search report | Publication date | Patent family member(s) | Publication date |
|---|---|---|---|
| US 2008031633 A1 | 07-02-2008 | JP 2008035319 A | 14-02-2008 |
| US 2006013597 A1 | 19-01-2006 | NONE | |
| US 2005019042 A1 | 27-01-2005 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001194267 A

### Non-patent literature cited in the description

- **Satoshi Tsukamoto ; Yuta Ishikawa ; Kazuro Kikuchi.** Optical Homodyne Receiver Comprising Phase and Polarization Diversities with Digital Signal Processing. *European Conference On Optical Communication,* 2006

- **Alan Pak Tao Lau ; Joseph Kahn.** Signal Design and Detection in Presence of Nonlinear Phase Noise. *Journal of Lightwave Technology,* October 2007, vol. 25 (10), 3008-3016